# EUROPÄISCHE PATENTSCHRIFT

(11) **EP 1 342 342 B1**
(45) Veröffentlichungstag und Bekanntmachung des Hinweises auf die Patenterteilung: **30.07.2008**
(21) Anmeldenummer: 01270979.6
(22) Anmeldetag: 13.12.2001
(51) Int. Cl.: H04L 12/24

(54) **AUTOMATISCHE KONFIGURATION EINES NETZWERKES**
AUTOMATIC CONFIGURATION OF A NETWORK
CONFIGURATION AUTOMATIQUE D'UN RESEAU

(30) Priorität: 14.12.2000 DE 10062322; 10.12.2001 DE 10160385
(43) Veröffentlichungstag der Anmeldung: 10.09.2003
(73) Patentinhaber: Hirschmann Electronics GmbH & Co. KG, 72654 Neckartenzlingen (DE)
(72) Erfinder: SCHMID, Bernhard, 73061 Ebersbach (DE)
(74) Vertreter: Thul, Hermann
(86) Internationale Anmeldenummer: PCT/EP2001/014669
(87) Internationale Veröffentlichungsnummer: WO 2002/049273

(56) Entgegenhaltungen:
- WO-A-01/50711
- WO-A-01/82032
- US-A- 5 526 489
- US-A- 6 098 116
- RAUE A: "NETZMANAGEMENT FUER DIE FABRIK DER ZUKUNFT. \NETWORK MANAGEMENT FOR THE FACTORY OF THE FUTURE" ZWF ZEITSCHRIFT FUR WIRTSCHAFTLICHE FERTIGUNG UND AUTOMATISIERUNG, CARL HANSER VERLAG. MUNCHEN, DE, Bd. 88, Nr. 4, 1. April 1993 (1993-04-01), Seiten 163-165, XP000360363 ISSN: 0947-0085
- MUELLER R: "LON - DAS UNIVERSELLE NETZWERK TEIL 1. \EIN NEUARTIGES KONZEPT, UM STEUERGERAETE, SENSOREN UND AKTOREN MITEINANDER SPRECHEN ZU LASSEN" ELEKTRONIK, FRANZIS VERLAG GMBH. MUNCHEN, DE, Bd. 40, Nr. 22, 29. Oktober 1991 (1991-10-29), Seiten 59-62,64-65,, XP000268228 ISSN: 0013-5658

## Beschreibung

Die Erfindung betrifft ein Verfahren und eine Konfigurationseinheit zur Konfiguration eines Netzwerkes gemäß den Merkmalen des jeweiligen Oberbegriffes der unabhängigen Patentansprüche.

Es ist allgemein bekannt, daß ein Netzwerk aus Endgeräten (netzwerkfähige Geräte wie z.B. PC, Eingabe- oder Ausgabemittel oder dergleichen) Daten über Netzwerkkomponenten (wie beispielsweise einen Feldbus) austauschen. Beim Anschluß an solche Netzwerke und zur Inbetriebnahme müssen bei den Endgeräten und auch bei den Netzwerkkomponenten selber Kommunikations- und Betriebsparameter konfiguriert werden, bevor ein Datenaustausch über das Netzwerk und der reguläre Betrieb möglich sind. Die Art der Konfiguration der Parameter ist vom Typ des Netzwerkes abhängig und kann einfach oder aufwendig sein, manuell oder teilautomatisiert durchgeführt werden und stellt demzufolge unterschiedliche Anforderungen an die Qualifizierung des Bedienpersonals.

Eine wichtige Anforderung vor allem im Betrieb der Steuerungs- und Automatisierungstechnik ist der rasche Austausch ausgefallener Geräte oder Netzwerkkomponenten, um kostenintensive Stillstandszeiten der zu steuernden Anlagen oder Systeme möglichst gering zu halten. Die ausgetauschten Geräte oder Komponenten müssen vor ihrer Inbetriebnahme in gleicher Weise wie das ausgefallene Teil konfiguriert werden, um nach dem Austausch deren Funktion übernehmen zu können. So beschränkt sich die Konfiguration der Kommunikationsparameter von Feldbus fähigen Geräten lediglich darauf, das einige wenige Schalter eingestellt werden, was auch von geringer qualifiziertem Personal durchgeführt werden kann.

In neuerer Zeit werden die eigentlich für den Bereich der Bürokommunikation entwickelten Netzwerkstandards (wie beispielsweise Ethernet, lokale Brücken nach IEE802.1 und die TCP/IP-Protokollfamilie) vermehrt für Steuerungs- und Automatisierungsaufgaben eingesetzt. Die Konfiguration der Kommunikations- und Betriebsparameter von Geräten- und Netzwerkkomponenten ist für dieses Netzwerkumfeld wesentlich komplexer und umfangreicher als bei Feldbussen. Dies ist vielleicht noch innerhalb der Bürokommunikation hinnehmbar, da dort qualifiziertes Personal zur Verfügung steht und Stillstandszeiten wenig kritisch sind. Eine umfangreiche Konfiguration kann aber im Bereich der Steuerungs- und Automatisierungstechnik nicht hingenommen werden, da hier einerseits die Stillstandszeiten kostenintensiv sind und im Regelfall qualifiziertes Personal nicht zur Verfügung steht.

Die US-A-6,098,116 zeigt ein Verfahren bzw. eine Vorrichtung zur Konfiguration von Endgeräten und Netzwerkkomponenten innerhalb eines Netzwerkes, wobei zwischen den Endgeräten ein Datenaustausch über die Netzwerkkomponenten stattfindet, wobei eine Konfiguration von zumindest einem Endgerät und/oder zumindest einer Netzwerkkomponente von einer innerhalb des Netzwerkes angeschlossenen Konfigurationseinheit abhängig von ihrer beliebigen Position innerhalb des Netzwerkes automatisch vorgenommen wird

Der Erfindung liegt daher die Aufgabe zugrunde, für dieses Netzwerkumfeld ein Verfahren sowie eine Vorrichtung zur Konfiguration von Endgeräten und Netzwerkkomponenten anzugeben, mit dem die eingangs geschilderten Nachteile vermieden werden.

Diese Aufgabe ist durch die Merkmale der unabhängigen Patentansprüche gelöst.

Erfindungsgemäß ist vorgesehen, daß eine Konfiguration von zumindest einem Endgerät und/oder zumindest einer Netzwerkkomponente abhängig von ihrer beliebigen Position innerhalb des Netzwerkes von einer innerhalb des Netzwerkes angeschlossenen Konfigurationseinheit vorgenommen wird. Dadurch wird es möglich, zentral über die Konfigurationseinheit vor Inbetriebnahme des Netzwerkes die Netzwerkkomponenten und die Endgeräte zu konfigurieren. Aber auch für den Fall, daß ein Endgerät und/oder eine Netzwerkkomponente defekt war und ausgetauscht wurde, kann das ausgetauschte Gerät bzw. die ausgetauschte Netzwerkkomponente zentral über die Konfigurationseinheit konfiguriert werden. Damit wird es möglich, daß nach der Inbetriebnahme des Netzwerkes, wenn kein entsprechend geschultes Personal mehr zur Verfügung steht oder nur in nicht ausreichend kurzer Zeit, die bei der Inbetriebnahme der Anlage vorgenommene Konfiguration in diesem Fehlerfall insbesondere automatisch auf die Ersatzkomponenten zu übertragen. Die Konfigurationseinheit wird also bei der Inbetriebnahme einer Anlage von qualifiziertem Personal eingerichtet, d.h. mit allen benötigten Informationen über die Kommunikations- und Betriebsparameter der Netzwerkkomponenten und Endgeräte und die Netzwerktopologie, d.h. über die Verkabelungsstruktur des Netzwerkes, Art, Anzahl und Ort der Endgeräte, Art, Anzahl und Ort der Netzwerkkomponenten versorgt und kann danach ohne manuellen Eingriff Ersatzgeräte bzw. Ersatzkomponenten automatisch konfigurieren. Durch diese Automation können ohne manuellen Eingriff das ausgefallene Endgerät bzw. die ausgefallene Netzwerkkomponente und das Ersatzgerät (-komponente) einander zugeordnet und das Ersatzgerät (-komponente) selbständig, d.h. automatisch mit den Kommunikations- und Betriebsparametern des ausgefallenen Endgerätes bzw. Netzwerkkomponente konfiguriert werden und kann damit dessen Funktion übernehmen.

Bei entsprechender Software und graphischer Darstellung in der Konfigurationseinheit können die erforderlich werdenden Schritte zur Konfiguration graphisch aufbereitet dargestellt werden, so daß einerseits eine schnellstmögliche Neukonfigurierung vorgenommen werden kann und andererseits diese Arbeit auch von weniger qualifiziertem Personal ausgeführt werden kann. Der wesentliche Vorteile besteht darin, daß die Topologie des Netzwerkes nicht starr vorgegeben sein muß, sondern daß mit einfachen Schritten eine Konfiguration von Netzwerken mit verschiedenen Topologien, gerade bei lokalen Netzwerken mit variabler Topologie wie dem Ethernet, ermöglicht wird, die auch von nicht speziell für diese Aufgaben geschultem Personal vorgenommen werden kann.

Hierzu ist zusätzlich vorgesehen, daß die Konfigurationseinheit eine Ist-Topologie des Netzwerkes mit einer Soll-Topologie vergleicht. Dabei kann dieser Vergleich kontinuierlich oder diskontinuierlich, insbesondere auch manuell beeinflußbar von außen, durchgeführt werden. Im laufenden Betrieb überwacht also die Konfigurationseinheit insbesondere kontinuierlich die Ist-Topologie des Netzwerkes und erkennt durch den Vergleich mit der Soll-Topologie Ausfälle von Netzwerkkomponenten und/oder Endgeräten und ebenfalls danach den Austausch und Anschluß von Ersatzgeräten an das Netzwerk. Abhängig vom Einsatzort des Ersatzgerätes bzw. der Ersatzkomponente konfiguriert die Konfigurationseinheit die Parameter des Ersatzgerätes bzw. der Ersatzkomponente wie z.B. die IP-Adresse, Netzmaske, Gateway-Adresse und dergleichen. Hierbei kann beispielsweise auf standardisierte Verfahren wie BOOTP oder DHCP zurückgegriffen werden.

Außerdem erfaßt und überprüft die Konfigurationseinheit den Austausch eines Endgerätes und/oder einer Netzwerkkomponente. Dadurch kann die Konfigurationseinheit durch Erfassung einer aktuellen Ist-Topologie und dem Vergleich einer zeitlich darauf folgenden und erfaßten Ist-Topologie erkennen, das ein Austausch des Endgerätes und/oder einer Netzwerkkomponente stattgefunden hat. Nach dem Austausch werden in dem Endgerät oder der Netzwerkkomponente die Kommunikationsparameter (wie IP-Adresse, Gateway-Adresse, Netzmaske) konfiguriert, woraufhin dann die Konfigurationseinheit mit dem Endgerät oder der Netzwerkkomponente kommunizieren kann und das Ersatzgerät bzw. die Ersatzkomponente daraufhin überprüft, ob es die ausgefallene Komponente bzw. Gerät funktional ersetzen kann. Ist dies möglich, werden danach die Betriebsparameter des Ersatzgerätes bzw. der Ersatzkomponente konfiguriert, was z.B. durch Senden und Laden einer Konfigurationsdatei innerhalb der ausgetauschten Komponente folgen kann. Kann jedoch das ausgetauschte Gerät bzw. die ausgetauschte Komponente das ausgefallene Gerät bzw. die ausgefallene Komponente funktional nicht ersetzen, wird eine Fehlermeldung generiert (z.B. in der Konfigurationseinheit), um zu signalisieren, daß das neu installierte Gerät bzw. die entsprechende Komponente für den weiteren Betrieb nicht geeignet ist.

In Weiterbildung der Erfindung ist die Soll-Topologie durch manuelle Eingabe und/oder automatisch bei Inbetriebnahme des Netzwerkes vorgebbar. Durch die Vorgabe der Soll-Topologie, die in der Konfigurationseinheit abgespeichert ist, werden bei Einrichtung oder Änderung einer Anlage alle Daten zur Topologie des Netzwerkes übergeben, d.h. die Verkabelungsstruktur des Netzwerkes, die Art, die Anzahl und der Ort der Netzwerkkomponenten sowie die Art, die Anzahl und die Orte der angeschlossenen Endgeräte. Um flexibel bei der Einrichtung der Anlage zu sein, kann in Abhängigkeit dieser Voraussetzungen die Datenübergabe von der Konfigurationseinheit an die Endgeräte bzw. die Netzwerkkomponenten manuell erfolgen. Alternativ dazu kann die Konfigurationseinheit die Netzwerktopologie bei der Errichtung bzw. Änderung der Anlage auch automatisch erkennen und als Sollwert abspeichern.

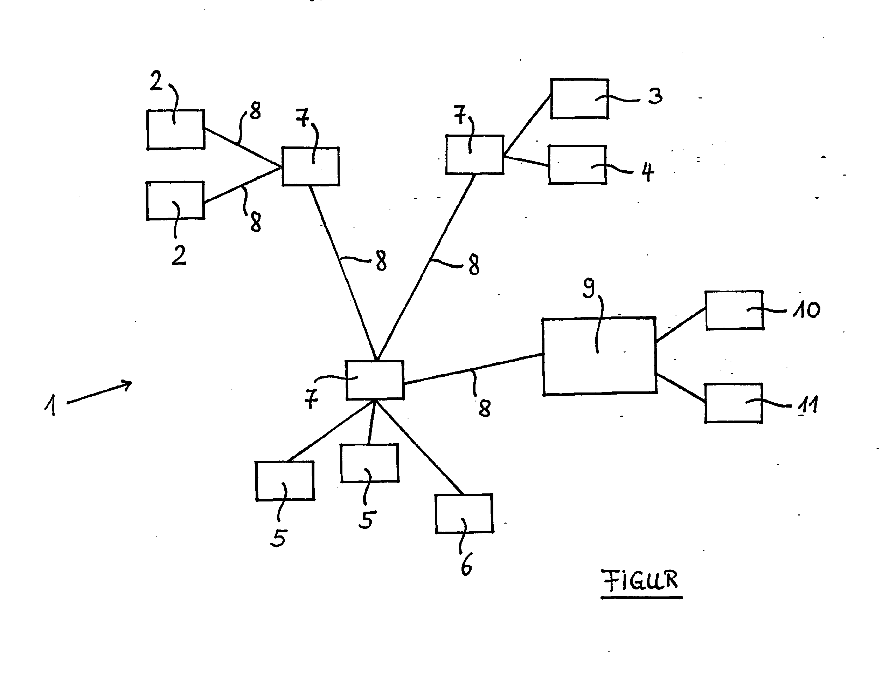

Im folgenden ist das Verfahren sowie eine beispielhafte Vorrichtung (Netzwerk) beschrieben und anhand der einzigen Figur erläutert.

In der Figur ist ein Netzwerk 1 gezeigt, das in beliebiger Anzahl und an beliebigen Orten ein oder mehrere Endgeräte 2 (wie z.B. PC aufweist. Unter den Begriff Endgerät fallen auch Eingabeeinheiten 3, Ausgabeeinheiten 4, Sensoren 5 sowie Aktuatoren 6 und weitere vergleichbare entsprechende Mittel. Die Anzahl und der Ort der genannten Endgeräte hängt von der Topologie des Netzwerkes ab. In Betracht kommen beispielsweise als Einsatzfelder die Steuerung oder Regelung von verfahrenstechnischen Anlagen oder sonstige Anwendungen in der Steuerungs- und Automatisierungstechnik sowie innerhalb der Bürokommunikation. Dies stellt jedoch keine Beschränkung des Einsatzgebietes der vorliegenden Erfindung dar.

Die beschriebenen Endgeräte mit den Bezugsziffern 2 bis 6 sind entweder einzeln oder in Gruppen an Netzwerkkomponenten 7 angeschlossen. Je nach Art und Ort des Endgerätes erfolgt ein Datenaustausch zwischen dem jeweiligen Endgerät und dem zugehörigen Netzwerk 7 über eine Datenleitung 8, wobei innerhalb des Netzwerkes 1 gleichartige oder unterschiedliche Datenleitungen 8 zum Einsatz kommen können. Mit der Bezugsziffer 9 ist die innerhalb des Netzwerkes 1 angeschlossene Konfigurationseinheit 9 bezeichnet, über die eine Konfiguration von zumindest einem Endgerät 2 bis 6 und/oder zumindest einer Netzwerkkomponte 7 vorgenommen wird. Um eine Soll-Topologie des Netzwerkes 1 vorgeben zu können, weist die Konfigurationseinheit 9 entweder Speichermittel (nicht dargestellt) auf, in denen die Soll-Topologie des Netzwerkes 1 abgelegt ist. Soll die Soll-Topologie von außen vorgegeben werden, kann dies über eine Eingabeeinheit 10, die an der Konfigurationseinheit 9 angeschlossen ist oder Bestandteil der Konfigurationseinheit 9 ist, erfolgen. Ebenso ist es denkbar, daß die Konfigurationseinheit 9 Mittel zur Erfassung der Topologie des Netzwerkes 1 aufweist, mit der sich die Endgeräte 2 bis 6 bzw. die Netzwerkkomponenten 7 erkennen und lokalisieren lassen. Sowohl die Soll-Topologie als auch die Ist-Topologie können auf einer Ausgabeeinheit 11 der Konfigurationseinheit dargestellt werden. Zu diesem Zweck weist die Konfigurationseinheit 9 Mittel auf, mit denen die Konfigurationseinheit 9 insbesondere kontinuierlich die Ist-Topologie des Netzwerkes überwacht und erkennt. Wird bei dieser Erfassung bzw. Überwachung festgestellt, daß ein Endgerät und/oder eine Netzwerkkomponente 7 fehlerhaft arbeitet, ausgefallen ist oder vom Netzwerk 1 entfernt wurde, kann eine entsprechende Fehlermeldung auf der Ausgabeeinheit 11 der Konfiguration 9 erzeugt werden. Dadurch kann umgehend auf die Art des Fehlers, die von der Fehlermeldung repräsentiert wird, reagiert werden, so daß Stillstandszeit in der Anlage weitestgehend vermieden werden. Somit kann also diese insbesondere kontinuierliche Überwachung der Topologie des Netzwerkes zur Netzwerkdiagnose (insbesondere Fehlererkennung und -lokalisierung) benutzt werden.

### Bezugszeichenliste:

- 1.: Netzwerk
- 2.: Endgerät
- 3.: Eingabeeinheit
- 4.: Ausgabeeinheit
- 5.: Sensor
- 6.: Aktuator
- 7.: Netzwerkkomponente
- 8.: Datenleitung
- 9.: Konfigurationseinheit
- 10.: Eingabeeinheit
- 11.: Ausgabeeinheit

## Patentansprüche

1. Verfahren zur Konfiguration von Endgeräten (2 bis 6) und Netzwerkkomponenten (7) innerhalb eines Netzwerkes (1), wobei zwischen den Endgeräten ein Datenaustausch über die Netzwerkkomponenten stattfindet, wobei eine Konfiguration von zumindest einem Endgerät und/oder zumindest einer Netzwerkkomponente von einer innerhalb des Netzwerkes angeschlossenen Konfigurationseinheit (9) abhängig von ihrer beliebigen Position innerhalb des Netzwerkes automatisch vorgenommen wird, **dadurch gekennzeichnet, daß** die Konfigurationseinheit eine Ist-Topologie des Netzwerkes mit einer Soll-Topologie vergleicht und die Konfigurationseinheit durch den obengenannten Vergleich den Austausch eines Endgerätes und/oder einer Netzwerkkomponente erfaßt und überprüft.

2. Verfahren nach Anspruch 1, **dadurch gekennzeichnet, daß** der Vergleich kontinuierlich durchgeführt wird.

3. Verfahren nach Anspruch 1 oder 2, **dadurch gekennzeichnet, daß** die Soll-Topologie durch manuelle Eingabe und/oder automatisch bei Inbetriebnahme des Netzwerkes vorgebbar ist.

4. Verfahren nach einem der vorhergehenden Ansprüche, **dadurch gekennzeichnet, daß** die Konfigurationseinheit das ausgetauschte Endgerät und/oder die ausgetauschte Netzwerkkomponente in gleicher Weise wie das ausgefallene Endgerät und/oder die ausgefallene Netzwerkkomponente konfiguriert.

5. Konfigurationseinheit zur Konfiguration von Endgeräten (2 bis 6) und Netzwerkkomponenten (7) innerhalb eines Netzwerkes (1), wobei zwischen den Endgeräten (2 bis 6) ein Datenaustausch über die Netzwerkkomponenten (7) stattfindet, wobei innerhalb des Netzwerkes (1) die Konfigurationseinheit (9) anschließbar ist, mit der eine Konfiguration von zumindest einem Endgerät (2 bis 6) und/oder zumindest einer Netzwerkkomponente (7) abhängig von ihrer beliebigen Position innerhalb des Netzwerkes automatisch vornehmbar ist, **dadurch gekennzeichnet, daß** die Konfigurationseinheit (9) Mittel zum Vergleich einer Ist-Topologie des Netzwerkes (1) mit einer Soll-Topologie sowie Mittel zur Erfassung und Überprüfung des Austausches eines Endgerätes (2 bis 6) und/oder einer Netzwerkkomponente (7) aufweist, wobei die Mittel zur Erfassung und Überprüfung den Austausch eines Endgerätes und/oder einer Netzwerkkomponente erfaßt basierend auf den Ergebnissen der obengenannten Mittel zum Vergleich.

6. Konfigurationseinheit nach Anspruch 5, **dadurch gekennzeichnet, daß** die Konfigurationseinheit (9) Mittel, insbesondere eine Eingabeeinheit (10) aufweist, mit der die Soll-Topologie durch manuelle Eingabe und/oder automatisch bei Inbetriebnahme des Netzwerkes vorgebbar ist.

7. Konfigurationseinheit nach einem der Ansprüche 5 bis 6, **dadurch gekennzeichnet, daß** die Konfigurationseinheit (9) Mittel zur Erfassung der Topologie des Netzwerkes (1) aufweist.

## Claims

1. Method for configuring terminals (2 to 6) and network components (7) inside a network (1), data being interchanged between the terminals via the network components, at least one terminal and/or at least one network component being automatically configured by a configuration unit (9), which is connected inside the network, on the basis of its/their arbitrary position inside the network, **characterized in that** the configuration unit compares an actual topology of the network with a desired topology and the configuration unit detects and checks the replacement of a terminal and/or a network component by means of the abovementioned comparison.

2. Method according to Claim 1, **characterized in that** the comparison is carried out continuously.

3. Method according to Claim 1 or 2, **characterized in that** the desired topology can be predefined by means of manual input and/or can be automatically predefined when starting up the network.

4. Method according to one of the preceding claims, **characterized in that** the configuration unit configures the replaced terminal and/or the replaced network component in the same manner as the failed terminal and/or the failed network component.

5. Configuration unit for configuring terminals (2 to 6) and network components (7) inside a network (1), data being interchanged between the terminals (2 to 6) via the network components (7), the configuration unit (9) being able to be connected inside the network (1) and being able to be used to automatically configure at least one terminal (2 to 6) and/or at least one network component (7) on the basis of its/their arbitrary position inside the network, **characterized in that** the configuration unit (9) has means for comparing an actual topology of the network (1) with a desired topology and means for detecting and checking the replacement of a terminal (2 to 6) and/or a network component (7), the detecting and checking means detecting the replacement of a terminal and/or a network component on the basis of the results from the abovementioned comparison means.

6. Configuration unit according to Claim 5, **characterized in that** the configuration unit (9) has means, in particular an input unit (10), which can be used to predefine the desired topology by means of manual input and/or to automatically predefine the desired topology when starting up the network.

7. Configuration unit according to either of Claims 5 and 6, **characterized in that** the configuration unit (9) has means for detecting the topology of the network (1).

## Revendications

1. Procédé de configuration de terminaux (2 à 6) et de composants de réseau (7) à l'intérieur d'un réseau (1), un échange de données ayant lieu entre les terminaux par le biais des composants de réseau, une configuration d'au moins un terminal et/ou d'au moins un composant de réseau étant effectuée automatiquement par une unité de configuration (9) raccordée à l'intérieur du réseau en fonction de sa position quelconque au sein du réseau, **caractérisé en ce que** l'unité de configuration compare une topologie réelle du réseau avec une topologie voulue et l'unité de configuration, par le biais de la comparaison mentionnée ci-dessus, détecte et contrôle le remplacement d'un terminal et/ou d'un composant de réseau.

2. Procédé selon la revendication 1, **caractérisé en ce que** la comparaison est effectuée continuellement.

3. Procédé selon la revendication 1 ou 2, **caractérisé en ce que** la topologie voulue peut être prédéfinie par une saisie manuelle et/ou automatiquement lors de la mise en service du réseau.

4. Procédé selon l'une des revendications précédentes, **caractérisé en ce que** l'unité de configuration configure le terminal remplacé et/ou le composant de réseau remplacé de la même manière que le terminal tombé en panne et/ou le composant de réseau tombé en panne.

5. Unité de configuration pour la configuration de terminaux (2 à 6) et de composants de réseau (7) à l'intérieur d'un réseau (1), un échange de données ayant lieu entre les terminaux (2 à 6) par le biais des composants de réseau (1), l'unité de configuration (9) pouvant être raccordée à l'intérieur du réseau (1), laquelle permet d'effectuer automatiquement une configuration d'au moins un terminal (2 à 6) et/ou d'au moins un composant de réseau (7) en fonction de sa position quelconque au sein du réseau, **caractérisée en ce que** l'unité de configuration (9) présente des moyens pour comparer une topologie réelle du réseau (1) avec une topologie voulue ainsi que des moyens pour détecter et contrôler le remplacement d'un terminal (2 à 6) et/ou d'un composant de réseau (7), les moyens de détection et de contrôle détectant le remplacement d'un terminal et/ou d'un composant de réseau en se basant sur les résultats des moyens de comparaison mentionnés ci-dessus.

6. Unité de configuration selon la revendication 5, **caractérisée en ce que** l'unité de configuration (9) présente des moyens, notamment une unité de saisie (10), avec lesquels la topologie voulue peut être prédéfinie par saisie manuelle et/ou automatiquement lors de la mise en service du réseau.

7. Unité de configuration selon la revendication 5 à 6, **caractérisée en ce que** l'unité de configuration (9) présente des moyens pour détecter la topologie du réseau (1).
